**Europäisches Patentamt**

**European Patent Office**

**Office européen des brevets**

(19)

(11) Veröffentlichungsnummer : **0 216 130**
**B1**

(12) # EUROPÄISCHE PATENTSCHRIFT

(45) Veröffentlichungstag der Patentschrift :
09.11.88

(51) Int. Cl.⁴ : **F 01 N   3/28**, B 01 J 35/04

(21) Anmeldenummer : **86111398.3**

(22) Anmeldetag : **18.08.86**

(54) **Wachstumskompensierender metallischer Abgaskatalysatorträgerkörper und Blech zu seiner Herstellung.**

(30) Priorität : **29.08.85 DE 3530893**

(43) Veröffentlichungstag der Anmeldung :
**01.04.87 Patentblatt 87/14**

(45) Bekanntmachung des Hinweises auf die Patenterteilung : **09.11.88 Patentblatt 88/45**

(84) Benannte Vertragsstaaten :
**AT BE CH DE FR GB IT LI LU NL SE**

(56) Entgegenhaltungen :
**FR-A- 2 140 110**
**FR-A- 2 447 462**
**GB-A- 2 001 547**

(73) Patentinhaber : **INTERATOM Gesellschaft mit beschränkter Haftung**
**Friedrich-Ebert-Strasse**
**D-5060 Bergisch-Gladbach 1 (DE)**

(72) Erfinder : **Cyron, Theodor**
**Kurt-Schumacher-Strasse 12**
**D-5060 Bergisch Gladbach (DE)**

(74) Vertreter : **Mehl, Ernst, Dipl.-Ing. et al**
**Postfach 22 13 17**
**D-8000 München 22 (DE)**

Jouve, 18, rue St-Denis, 75001 Paris, France

## Beschreibung

Die vorliegende Erfindung betrifft einen metallischen Abgaskatalysatorträgerkörper nach dem Oberbegriff des Anspruchs 1 sowie Bleche zu seiner Herstellung. Der prinzipielle Aufbau von Katalysatorträgerkörpern aus glatten und gewellten Blechen ist beispielsweise aus der DE-C-11 92 624 bekannt. Die Verwendung solcher Katalysatorträgerkörper aus Stahlblechen für Autoabgase ist aus der DE-A-23 02 746 und mehreren Weiterentwicklungen bekannt. So ergibt sich beispielsweise aus der DE-A-24 03 024, daß solche Trägerkörper auch aus streifenförmigen Blechen hergestellt werden können. Auch sind schon Katalysatorträgerkörper mit geschlitzten oder anderweitig verformten Blechen bekannt, wodurch die Verwirbelung der Abgase begünstigt werden soll.

Ferner ist aus der DE-A-22 26 662 die Verwendung von Streckmetall anstelle der üblichen Stahlbleche bei Katalysatorträgerkörpern bekannt. Die bisherigen Formen der Bleche richteten sich jedoch nur nach den Anforderungen an die Haftung der späteren Beschichtung und an die Gasführungseigenschaften.

Es hat sich jedoch gezeigt, daß eine weitere Eigenschaft der metallischen Abgaskatalysatorträgerkörper bei der Gestaltung der Bleche, aus denen er zusammengesetzt ist, berücksichtigt werden muß. Während eines längeren Betriebes bei sehr hoher Temperatur wachsen die üblicherweise verwendeten aluminiumhaltigen Stahlbleche um bis zu 20 % ihrer ursprünglichen Abmessung. Hierbei handelt es sich nicht um eine thermische Dehnung, sondern um ein tatsächliches Wachstum, welches auch nach Abkühlung des Körpers bestehen bleibt. Wird dieses Wachstum, beispielsweise durch eine fügetechnische Verbindung mit einem dicken Mantelrohr, behindert, so bauen sich erhebliche Spannungen auf, welche den gesamten Katalysatorträgerkörper zerstören können. Die hohen mechanischen Belastungen eines Abgaskatalysatorträgerkörpers, insbesondere bei Kraftfahrzeugen, erfordern jedoch andererseits eine möglichst stabile Befestigung in einem Mantelrohr.

Aufgabe der vorliegenden Erfindung ist die Schaffung eines Abgaskatalysatorträgerkörpers, welcher sein während der Betriebsdauer auftretendes Wachstum im Inneren kompensieren kann, ohne daß sich seine Außenmaße, insbesondere seine Länge in Abgasströmungsrichtung, verändern.

Zur Lösung dieser Aufgabe wird ein Abgaskatalysatorträgerkörper mit den Merkmalen des Anspruchs 1 vorgeschlagen. Durch das Vorhandensein von Spalten quer zur Abgasrichtung können Längendehnungen des Katalysatorträgerkörpers sich in diese Spalte hinein entwickeln, so daß sich die Gesamtlänge des Katalysatorträgerkörpers nicht verändern muß. Dazu muß natürlich die Zahl und Größe der Spalte im Neuzustand so bemessen sein, daß das erwartete Wachstum von den Spalten aufgenommen werden kann. Je nach vorgesehener Lebensdauer sollten die Spalte daher 5, 10, 20 oder bis zu 30 % der Längenausdehnung des Katalysatorträgerkörpers ausmachen.

In weiterer Ausgestaltung der Erfindung wird in Anspruch 2 vorgeschlagen, daß die Stahlbleche in regelmäßigen Abständen etwa quer zur Abgasrichtung verlaufende, gegeneinander versetzte Spalte aufweisen, die vorzugsweise die Form von sehr langgestreckten Rauten haben. Ein solches Blech ähnelt optisch etwas einem Streckmetall kurz nach Beginn der Streckung, nur das die Spalte in Längsrichtung des Blechbandes verlaufen und nicht wie bei Streckmetallen in Querrichtung.

In den Ansprüchen 3 und 4 sind weitere vorteilhafte Ausgestaltungen der Erfindung beschrieben, welche die Maße und Längenverhältnisse der Spalte betreffen. Diese Abmessungen lassen ein genügendes Wachstum zu, sind jedoch andererseits für die Stabilität des Katalysatorträgerkörpers nicht abträglich.

In spezieller Ausgestaltung der Erfindung wird in Anspruch 5 vorgeschlagen, daß ein derart aufgebauter Katalysatorträgerkörper an beiden Enden und gegebenenfalls auch in anderen Bereichen seines Umfanges mit einem Mantelrohr fügetechnisch fest verbunden sein kann. Dies ist einer der entscheidenden Vorteile der vorliegenden Erfindung, da das Wachstum bei dieser Ausführung keine nachteiligen Folgen für die Stabilität der Befestigung mit sich bringt.

Weiterhin wird in Anspruch 6 vorgeschalgen, daß der Abgaskatalysatorträgerkörper einen von der Kreisform abweichenden Querschnitt aufweisen soll. Während sich für zylindrische Abgaskatalysatorträgerkörper auch andere Möglichkeiten zur Kompensation des Wachstums relativ leicht verwirklichen lassen, wird dies bei Katalysatorträgerkörpern mit einem von der Kreisform abweichenden Querschnitt immer schwieriger. Hier schafft die vorliegende Erfindung Abhilfe, so daß auch wachstumskompensierende Katalysatorträgerkörper mit beliebigem Querschnitt hergestellt werden können.

Entsprechende Stahlbleche zur Herstellung der erfindungsgemäßen Abgaskatalysatorträgerkörper sind in Anspruch 7 beschrieben.

Ein Ausführungsbeispiel der Erfindung ist in der Zeichnung dargestellt und zwar zeigen

Figur 1 ein erfindungsgemäßes Stahlblechband und

Figur 2 einen vergrößerten Ausschnitt zur Veranschaulichung der Maße der Spalte.

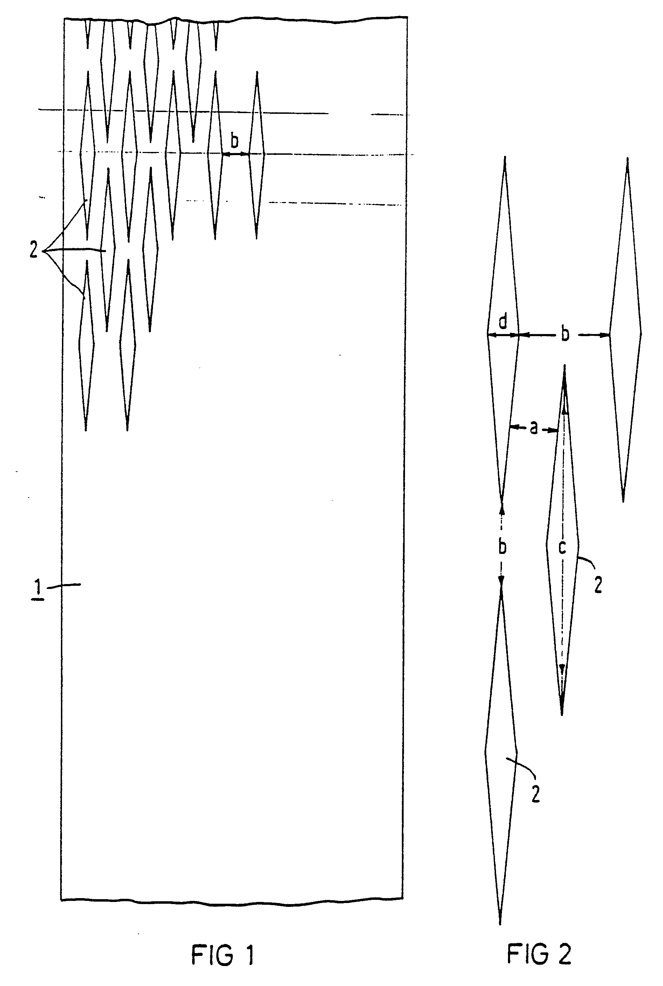

Ein Stahlblechband 1 ist mit einer vielzahl von rautenförmigen Spalten 2 versehen, welche untereinander in regelmäßigen Abständen b angeordnet sind, und zwar so, daß die Mittelpunkte der Rauten wiederum etwa ein Rautenmuster bilden. Die Breite a der Stege zwischen den einzelnen Spalten 2 beträgt somit etwa die Hälfte der Abstände b zwischen nebeneinander bzw. hintereinander liegenden Spalten 2. Die Breite d der rautenförmigen Spalten 2 ist sehr viel geringer als die Länge c der Spalten 2. Das Verhältnis c : d sollte mindestens 5 : 1 betragen, vorzugsweise jedoch größer als 10 : 1 sein. Der absolute Betrag der Spaltbreite d kann beispielsweise etwa zwischen 1 mm und 5 mm liegen. Solche Spalten können auf verschiedene Weise hergestellt werden, beispielsweise durch Ausstanzen, Ätzen oder dergleichen. Auch eine galvanoplastische Herstellung der Stahlbleche, bei der die Spalte 2 direkt ausgespart bleiben, ist möglich. Ebenso können die Spalte 2 durch Längsschlitzen und Spreizen hergestellt werden. Diese zur Kompensation des Wachstums dienenden Spalte 2 können auch so dimensioniert werden, daß sie selbst bei maximalem Wachstum noch nicht ganz geschlossen sind. Sie tragen dann während der ganzen Lebensdauer des Katalysatorträgerkörpers zur Verwirbelung der Abgase bei und erhöhen somit die Wirksamkeit des Katalysatorsystems. Die vorliegende Erfindung eignet sich insbesondere für metallische Katalysatorträgerkörper, welche für einen motornahen Einbau vorgesehen sind.

## Patentansprüche

1. Metallischer Abgaskatalysatorträgerkörper, der aus hochtemperaturfesten, aluminiumhaltigen Stahlblechen (1) geschichtet oder gewickelt ist, und der eine Vielzahl für Abgas durchlässige Zellen aufweist, dadurch gekennzeichnet, daß die Stahlbleche (1) etwa quer zur Abgasrichtung Spalte (2) aufweisen, deren Zahl und Größe im Neuzustand so bemessen sind, daß bei jedem Schnitt in Abgasrichtung durch die Stahlbleche zwischen 5 % und 30 %, vorzugsweise zwischen 10 % und 20 %, der Schnittlinie durch Spalt (2) führt.

2. Abgaskatalysatorträgerkörper nach Anspruch 1, dadurch gekennzeichnet, daß die Stahlbleche (1) in regelmäßigen Abständen (b) etwa quer zur Abgasrichtung verlaufende, gegeneinander versetzte Spalte (2) aufweisen, die die Form von Rauten haben mit einem Verhältnis von Länge (c) zu Breite (d) von mindestens c : d = 5 : 1, vorzugsweise größer 10 : 1.

3. Abgaskatalysatorträgerkörper nach Anspruch 1 dadurch gekennzeichnet, daß das Verhältnis von Länge (c) zu Breite (d) der Spalte mindestens c : d = 5 : 1, vorzugsweise größer 10 : 1 ist.

4. Abgaskatalysatorträgerkörper nach Anspruch 1, 2 oder 3, dadurch gekennzeichnet, daß die Abstände (b) von in Abgasrichtung nebeneinander und hintereinander liegenden Spalten (2) mindestens das Dreifache der Breite (d) der Spalte (2) betragen, vorzugsweise ungefähr das Fünffache.

5. Abgaskatalysatorträgerkörper nach einem der vorhergehenden Ansprüche, dadurch gekennzeichnet, daß der Trägerkörper an beiden Enden und gegebenenfalls auch in anderen Bereichen seines Umfangs mit einem Mantelrohr fügetechnisch fest verbunden ist.

6. Abgaskatalysatorträgerkörper nach einem der vorhergehenden Ansprüche, dadurch gekennzeichnet, daß der Abgaskatalysatorträgerkörper einen von der Kreisform abweichenden Querschnitt aufweist.

7. Stahlblech zur Herstellung eines Abgaskatalysatorträgerkörpers gemäß einem der vorhergehenden Ansprüche, dadurch gekennzeichnet, daß das Stahlblech (1) aluminiumhaltig ist und in regelmäßigen Abständen (b) etwa quer zur Abgasrichtung verlaufende, gegeneinander versetzte Spalte (2) aufweist, vorzugsweise in Form von Rauten, wobei die Spalte ein Verhältnis von Länge (c) zu Breite (d) von mindestens c : d = 5 : 1, vorzugsweise größer 10 : 1 aufweisen.

## Claims

1. Metallic exhaust gas catalyst support body, which is layered or coiled from aluminium-containing steel sheets (1) which are resistant to high temperatures, and has a plurality of cells which are permeable to exhaust gas, characterised in that the steel sheets (1) have slits (2) approximately at right angles to the exhaust direction, whose number and size in the new state are dimensioned in such a way that in every section through the steel sheets in the exhaust direction, between 5 % and 30 %, preferably between 10 % and 20 %, of the line of intersection leads through slits (2).

2. Exhaust gas catalyst support body according to claim 1, characterised in that the steel sheets (1) have at regular intervals (b) slits (2), which run approximately at right angles to the exhaust direction and are staggered, and have the form of rhombuses with a length (c) to width (d) ratio of at least c : d = 5 : 1, preferably greater than 10 : 1.

3. Exhaust gas catalyst support body according to claim 1, characterised in that the length (c) to width (d) ratio of the slits is at least c : d = 5 : 1, preferably greater than 10 : 1.

4. Exhaust gas catalyst support body according to claim 1, 2 or 3, characterised in that the intervals (b) of slits (2) located next to one another and behind each other in the exhaust direction have at least three times the width (d) of the slits (2), preferably about five times the width.

5. Exhaust gas catalyst support body according to one of the previous claims, characterised in that the support body is fixedly connected to an enclosing tube at both ends and if appropriate also in other regions of its periphery by a joining technique.

6. Exhaust gas catalyst support body according to one of the previous claims, characterised in that the exhaust gas catalyst support body has a cross-section which deviates from the circular form.

7. Steel sheet for producing an exhaust gas catalyst support body according to one of the previous claims, characterised in that the steel sheet (1) contains aluminium and has slits (2) which run approximately at right angles to the exhaust direction and are staggered, preferably in the form of rhombuses, wherein the slits have a length (c) to width (d) ratio of at least c : d = 5 : 1, preferably greater than 10 : 1.

## Revendications

1. Corps métallique destiné à supporter un catalyseur pour des gaz d'échappement, qui est constitué d'un empilement ou d'un enroulement de tôles d'acier (1) contenant de l'aluminium et résistant à une température élevée, et qui comporte un grand nombre de cellules perméables aux gaz d'échappement, caractérisé en ce que les tôles d'acier (1) comportent, à peu près transversalement à la direction des gaz d'échappement, des fentes (2) dont le nombre et les dimensions à l'état neuf sont tels que, pour chaque coupe des tôles d'acier effectuée dans la direction des gaz d'échappement, de 5 à 30 % et, de préférence, de 10 à 20 % de la ligne de coupe passent par une fente (2).

2. Corps destiné à supporter un catalyseur pour des gaz d'échappement suivant la revendication 1, caractérisé en ce que les tôles d'acier (1) comportent, à des intervalles (b) réguliers, des fentes (2) qui s'étendent à peu près transversalement à la direction des gaz d'échappement qui sont décalées les unes par rapport aux autres et qui ont la forme de losanges, ayant un rapport de la longueur (c) à la largeur (d) d'au moins c : d = 5 : 1 et, de préférence supérieur à 10 : 1.

3. Corps destiné à supporter un catalyseur pour des gaz d'échappement suivant la revendication 1, caractérisé en ce que le rapport de la longueur (c) à la largeur (d) de la fente est d'au moins c : d = 5 : 1 et, de préférence, est supérieur à 10 : 1.

4. Corps destiné à supporter un catalyseur pour des gaz d'échappement suivant la revendication 1, 2 ou 3, caractérisé en ce que les intervalles (b) entre des fentes (2) se trouvant côte à côte ou l'une derrière l'autre, dans la direction des gaz d'échappement, représentent au moins le triple de la largeur (d) des fentes (2) et, de préférence, environ le quintuple.

5. Corps destiné à supporter un catalyseur pour des gaz d'échappement suivant l'une des revendications précédentes, caractérisé en ce que le corps support est relié rigidement par une technique d'assemblage à un tube enveloppe aux deux extrémités et, le cas échéant, également en d'autres endroits de son pourtour.

6. Corps destiné à supporter un catalyseur pour des gaz d'échappement suivant l'une des revendications précédentes, caractérisé en ce que le corps destiné à supporter un catalyseur pour des gaz d'échappement a une section transversale s'écartant de la forme circulaire.

7. Tôle d'acier pour la fabrication d'un corps destiné à supporter un catalyseur pour des gaz d'échappement suivant l'une des revendications précédentes, caractérisée en ce que la tôle d'acier (1) contient de l'aluminium et comprend, à des intervalles (b) réguliers, des fentes (2) qui s'étendent à peu près transversalement à la direction des gaz d'échappement, qui sont décalées les unes par rapport aux autres et qui se présentent, de préférence, sous forme de losanges, les fentes ayant un rapport de la longueur (c) à la largeur (d) d'au moins c : d = 5 : 1 et, de préférence, supérieur à 10 : 1.

FIG 1

FIG 2